# DEMANDE DE BREVET EUROPEEN

(11) **EP 2 821 176 A1**
(43) Date de publication de la demande: **07.01.2015**
(21) Numéro de dépôt: 13290154.7
(22) Date de dépôt: 02.07.2013
(51) Int. Cl.: B23K 37/02, B23K 26/08, B23K 26/26, B23K 26/38, B23K 26/30, B26F 3/00

(54) **Dispositif de déplacement d'un arrangement de découpe et de soudage de bandes métalliques ; Méthode de découpe et de soudage utilisant un tel dispositif**

(71) Demandeur: Siemens VAI Metals Technologies GmbH, 4031 Linz (AT)
(72) Inventeur: Ruesch, Jérémie, F-42800 St Martin La Plaine (FR); Thomasson, Herve, F-38200 Seyssuel (FR); Vercasson, Cedric, F-42400 Saint Chamond (FR)
(74) Mandataire: Maier, Daniel Oliver

(57) **Abrégé**

La présente invention décrit une dispositif de déplacement d'au moins un arrangement de découpe (D1) et de soudage (S1) apte à découper puis souder une queue d'une première bande (B1) métallique avec une tête d'une deuxième bande (B2) métallique. Le dispositif comprend au moins un premier chariot (Ch1) maintenant au moins une tête de soudage (S1), le dit premier chariot (Ch1) étant déplaçable sur un chemin de guidage (Cg1) suivant une première course (C1) balayant une région transversale de bande, au moins un deuxième chariot (Ch2) distinctement mobile du premier chariot maintenant une tête de découpe (D1), le dit deuxième chariot (Ch2) étant déplaçable sur un chemin de guidage (Cg2) suivant une deuxième course (C2). De plus, la tête de soudage (S1) est dédiée uniquement à un mode de soudage, et le deuxième chariot (Ch2) est dédié exclusivement à un mode de découpe. Une méthode de soudage utilisant ce dispositif est aussi décrite.

## Description

La présente invention concerne un dispositif de déplacement d'un arrangement de découpe et de soudage d'une queue d'une première bande métallique avec une tête d'une deuxième bande métallique ainsi qu'une méthode associée audit dispositif selon chacun des préambules des revendications 1 et 14.

Dans le domaine du traitement métallurgique de bandes métalliques en défilement au travers d'une ligne comprenant des modules de traitement (laminoir, planeuse, fours, décapage, galvanisation, recuit, etc.), les bandes métalliques sont idéalement introduites à partir de bobines qui sont successivement débobinées afin de les disposer séquentiellement sur ladite ligne. Afin de pouvoir obtenir un défilement physique continu de bandes à traiter, il est souhaitable de découper, puis de souder une queue d'une première bande débobinée à une tête d'une deuxième bande au moins partiellement débobinée, les dites queue et tête de bande étant ainsi amenées dans une installation de soudage, notamment appelée soudeuse. Durant l'opération de soudage pendant laquelle nécessairement queue et tête de bandes doivent être immobilisées entre des mors afin d'y être soudées (après un découpage), il est nécessaire de limiter au moins ou de ne pas ralentir la vitesse de défilement de la bande (soudée) au niveau de traitements en aval de la soudeuse. Aussi, des moyens d'accumulation de longueur de bande sont disposés en aval et éventuellement en amont de la soudeuse afin de permettre la continuation du ou des procédés de traitement malgré la période d'arrêt et/ou ralentissement sur la soudeuse grâce à l'accumulation et/ou de dévidement de bande dans lesdits moyens d'accumulation de longueur de bande. Ces moyens d'accumulations sont ainsi à minimiser, car ils sont coûteux et volumineux. En particulier, une ligne de traitement de telles bandes doit tendre à permettre un défilement continu des bandes depuis une débobineuse en entrée de ligne vers une rebobineuse ou empilage de sections découpées de bande en sortie de ligne. Il est donc aussi souhaitable de minimiser chaque durée d'arrêt de bande (au moins d'une queue et/ou d'une tête) à un point de ligne telle que dans la soudeuse tout en réduisant les accumulations anti-productives en ce sens qu'elles ne sont que synonymes de coûts correspondant à une réduction de la productivité de ligne par une réduction de la vitesse moyenne de défilement de bande dans la ligne de traitement et une augmentation des équipements destinés à écrêter dans certaines sections de la ligne, les ralentissements de bande tels que au moins les moyens d'accumulation de bande.

Par ailleurs, les bandes de bobines peuvent présenter des largeurs, épaisseurs et propriétés métallurgiques différentes à leur arrivée dans une soudeuse, ceci étant d'autant plus vrai lorsque divers types et formats de bandes y sont introduites. Actuellement, il existe ainsi principalement deux types de soudeuses dites légères et lourdes afin de pouvoir souder des largeurs et épaisseurs diverses de bandes métalliques en tenant compte des contraintes exercées sur la zone soudée par les actions induites par les procédés de traitement aval de la soudeuse. En d'autres termes, pour des applications de soudage plus étendue sur chacun des domaines « léger ou lourd », il est souhaitable de pouvoir étendre les plages de soudage à des formats et types de bandes plus importantes voire le contraire. Toutefois, dans le cas d'une soudeuse adaptée à des bandes de faibles format, si il est voulu d'étendre le soudage à un format plus étendu (en supposant que les largeurs, épaisseurs et caractéristiques métallurgique de bandes n'excèdent pas les capacités possible de ladite soudeuse, la durée de soudage sera augmentée au moins au pro rata de l'augmentation de longueur de soudure liée à la largeur souhaitée. Ceci amènera ainsi à un ralentissement de productivité de la ligne de traitement (en aval) et potentiellement à un accroissement de moyens d'accumulations en aval. Outre le fait que la durée anti-productive sera pénalisante, il faudra aussi prévoir des accumulateurs de capacité accrue de stockage adaptés pour des formats de bandes de largeur plus étendue. De ce fait, il est déductible que de tels moyens d'accumulation en aval (et le cas échéant en amont) seront aussi nécessairement plus lourds et encore plus coûteux qu'à l'origine pour une soudeuse qui devra être adaptée à souder des formats plus importants de bandes.

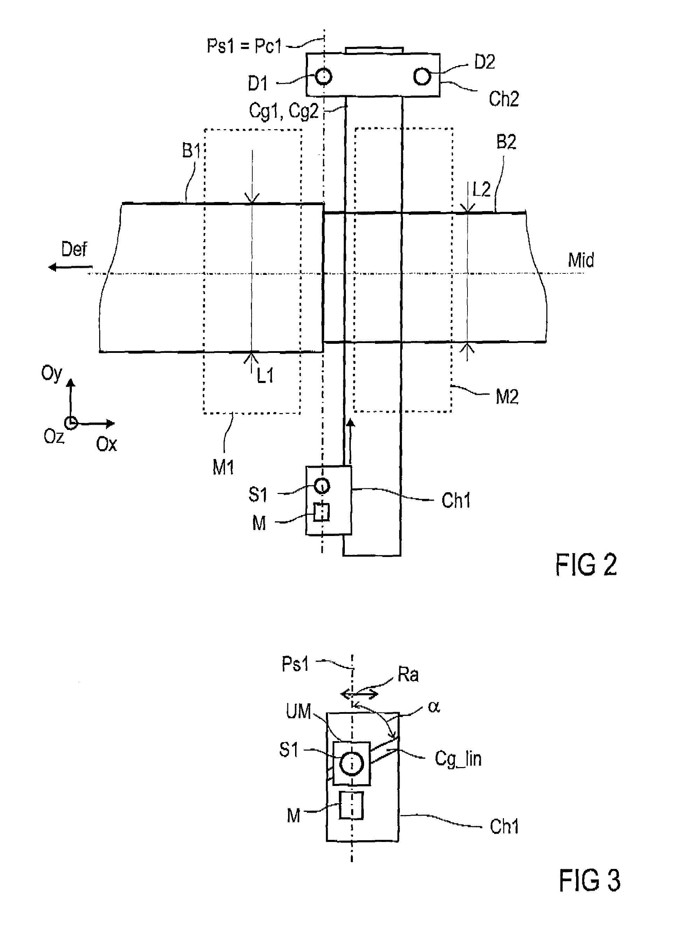

Principalement, la présente invention se fonde sur un état de la technique qui prévoit un dispositif de déplacement d'au moins un arrangement de découpe et de soudage apte à découper puis souder une queue d'une première bande métallique avec une tête d'une deuxième bande métallique, ledit dispositif comprenant au moins un premier chariot maintenant au moins une tête de soudage, le dit premier chariot étant déplaçable sur un chemin de guidage suivant une première course balayant au moins une région transversale (dite communément « largeur ») de bande. De plus, le dispositif comprend au moins un deuxième chariot distinctement mobile du premier chariot maintenant une tête de découpe, le dit deuxième chariot étant déplaçable sur un chemin de guidage suivant une deuxième course. Un tel dispositif est bien illustré et décrit au travers de la publication DE102007023017A1 (voir figures 2a, 2b, 2c) présentant une telle configuration de deux chariots. Chacun des chariots comportant des têtes commutables entre deux modes de découpe et de soudage. Ce type de têtes commutables, principalement alimentées par au moins une source laser, est à ce jour une technique flexible de mode opératoire plus adapté à la découpe et soudage de flans métalliques de formes variables, toutefois les dites têtes présentent l'inconvénient de ne pas avoir les mêmes performances de découpe et de soudage que des têtes de découpe et de soudage distinctes uniquement dédiées respectivement à la découpe et au soudage de bandes métalliques. Ceci est d'autant plus avéré que les bandes à découper et à souder peuvent présenter des formats, des épaisseurs et des caractéristiques métallurgiques, physiques/mécaniques diverses et donc requiert des spécificités rigoureuses en terme de performance de découpe et de soudage qui sont difficilement accessibles sous une même technologie de tête universelle de découpe et de soudage. Par ailleurs, le dispositif selon DE102007023017A1 prévoit entre deux étapes de découpe (figure 2a) et de soudage (figure 2c) une étape intermédiaire (figure 2b) d'ajustement d'au moins un des deux chariots par rapport à l'autre de façon à replacer les têtes de découpe longitudinalement alignées à commuter en mode de soudage vers des positions transversalement alignées par rapport à une direction initiale de défilement de bande. Cette étape intermédiaire présente deux inconvénients : le premier réside dans la perte de temps due au changement d'alignement des têtes et des chariots induisant irrémédiablement une baisse de productivité ou un besoin d'accumulation accrue ; le deuxième réside enfin dans la haute précision de l'alignement requis de cet arrangement dynamique chariots/têtes imposant ainsi des moyens d'alignement onéreux pour obtenir la fiabilité et robustesse nécessaire. Certes, grâce à de tels moyens d'alignement précis de chariots et leurs têtes, un emploi avantageux du dispositif selon DE102007023017A1 est de pouvoir aisément souder des segments de deux tôles selon des formes de soudures libres, mais la présente invention vise la découpe et le soudage d'arêtes linéaires de queue et de tête de bandes, donc sous des profils plus simples.

Enfin, la présente invention tient également à éviter une technique classique dit « mono-chariot » équipé de têtes de soudage voir de découpe, tel que par exemple l'arrangement muni d'un mono-chariot équipé d'un bras pivotant comprenant des têtes multiples de type commutable découpe/soudage tel que présenté dans la même publication DE102007023017A1 (figures 1a, 1b, 1c) ainsi que dans JP S60-257983.Ce type de construction implique outre les inconvénients liés aux têtes bi-fonction de découpe et soudage également une étape intermédiaire (telle que DE102007023017A1 en figure 1b) trop consommatrice de temps en terme de cycle et précision comme décrit précédemment.

Il est aussi à noter que des dispositifs de découpe et de soudage qui requiert des moyens d'alignement et/ou de pivot supportés par un ou plusieurs éléments de portance et de guidage imposent à ces éléments d'être complexes et donc encombrants et/ou lourds d'autant plus que la précision et fiabilité des dits moyens est hautement requise pour des installations travaillant en service continu 24 heures sur 24. Le plus souvent de tels éléments sont même réalisés sous forme massive en « C », de façon à permettre le défilement, au droit de la bande, de têtes de découpe, soudure, galetage, contrôle qualité, chauffage, etc., indépendamment de la présence de ladite bande.

Si de plus, il est requis de disposer des modules supplémentaires au dispositif selon l'invention, tels qu'au moins un des modules suivant:
- un moyen de contrôle de qualité de soudure;
- une unité de galetage de zone soudée ;
- un moyen de recuit de zone à souder et/ou soudée ;
un dispositif tel que précédemment décrit sera d'autant plus massif et encombrant, et il serait même extrêmement complexe voir impossible d'y intégrer de tels modules (par exemple un moyen de galetage sur des chariots pivotant ou exécutant des profils non-linéaires de découpe/soudage). A ce titre, les dispositifs connus de déplacement d'au moins un arrangement de découpe et de soudage présentent ainsi un manque manifeste de modularité.

Un but de la présente invention est de proposer un dispositif de déplacement d'au moins un arrangement de découpe et de soudage apte à découper puis souder une queue d'une première bande métallique avec une tête d'une deuxième bande métallique, le dit dispositif pouvant résoudre les problématiques connues décrites dans l'état de l'art, comme précédemment décrites.

En particulier, l'invention traitent des problématiques visant à proposer les avantages suivant :
- Diminution de moyen d'accumulation de bandes en défilement, hausse de productivité, diminution de durée d'un cycle de découpe et de soudage ;
- Simplification du cycle de découpe et de soudage
- Utilisation de tête (distinctes) de découpe et de soudage à hautes performances ;
- Adaptation accrues à des formats et propriétés divers de bandes ;
- Simplification, modularité, intégrabilité et allégement/compactage de structures de portage/chariotage ;
- Limitation de trop fortes tolérances constructives de mécanique requises en particulier par un aspect dynamique de précision de déplacement et positionnement des chariots et têtes de découpe/soudage sur des courses variables de découpe et soudage, celles-ci pouvant varier de quelques dizaines de centimètres à plusieurs mètres ;
- Fiabilité et robustesse des fonctions répétitives nécessaires à l'opération de soudage des bandes ;
- Facilitation des opérations de maintenance de la machine grâce à en particulier un accès aisé aux différentes têtes et modules.

En association avec un tel dispositif de déplacement, il se doit d'être finalement proposée une méthode de découpe puis de soudage, la dite méthode étant en particulier optimisée en termes de durée minimale d'immobilisation de bandes dans une soudeuse, c'est-à-dire en évitant toute perte de temps hors d'une étape de découpe et d'une étape de soudage des queue et tête de bandes, en particulier au moyen du dispositif de déplacement.

Un tel dispositif de déplacement ainsi qu'une méthode de soudage associée sont ainsi présentés au travers des caractéristiques des revendications 1 et 14.

Un ensemble de sous-revendications présente également des avantages de l'invention.

Principalement, à partir d'un dispositif de déplacement d'au moins un arrangement de découpe et de soudage apte à découper puis souder une queue d'une première bande métallique avec une tête d'une deuxième bande métallique, l'invention propose un dispositif comprenant un premier chariot maintenant au moins une tête de soudage, le dit premier chariot étant déplaçable sur un chemin de guidage suivant une première course balayant une région transversale de bande définie en fonction d'une largeur de découpe puis de soudage des dites queue et tête de bandes. Le dispositif comprend au moins un deuxième chariot distinctement mobile du premier chariot maintenant une tête de découpe, le dit deuxième chariot étant déplaçable sur un chemin de guidage suivant une deuxième course. Enfin, le dispositif selon l'invention se caractérise en ce que :
- la tête de soudage est dédiée uniquement à un mode de soudage des queue et tête des bandes découpées,
- le deuxième chariot est dédié exclusivement à un mode de découpe, c'est-à-dire qu'il ne comporte qu'au moins une unité de découpage, idéalement constituée de deux têtes de découpe, respectivement disposées en bordure de chacune des queue et tête des deux bandes.

En d'autres termes, le premier chariot est libre de fonction de découpage, car il supporte uniquement au moins une tête de soudage (non commutable sur un mode de découpe).

Le premier et le deuxième chariots étant distinctement mobiles et ayant des modes distincts de soudage et de découpe, le dispositif selon l'invention présente donc une excellente modularité pour passer successivement et directement d'un mode de découpe à un mode de soudage. Aucune étape intermédiaire de repositionnement d'au moins un des deux chariots et/ou ses têtes n'est nécessaire entre les étapes de découpe et de soudage, à l'inverse de DE102007023017A1 (figure 1b) ou de JP S60-257983 (par pivot du bras 15). Il est ainsi possible de limiter avantageusement des tolérances constructives de mécanique requises en particulier par un aspect dynamique de précision de déplacement et positionnement intrinsèque des chariots et têtes de découpe/soudage entre les étapes de découpe et de soudage. Seules les tolérances très précises constructives mécaniques requises sont simplement exigées sur des courses variables de découpe et de soudage. Au même titre, des moyens complexes, encombrants et onéreux de translation ou pivot intermédiaires au dits modes de découpe et de soudage sont ainsi éliminés. Le dispositif selon l'invention est ainsi aussi significativement allégé et sa structure de maintien par un unique chemin de guidage (idéalement simplement longiligne) des deux chariots peut être moins massive et encombrante que des structures décrites dans l'état de la technique.

Etant donné qu'une étape intermédiaire entre les étapes de découpe et de soudage effectuées par activations directement successives de déplacement des deux chariots du dispositif selon l'invention, un cycle de découpe et de soudage présente une durée minimisée, ce qui avantageusement permet une diminution de moyen d'accumulation de bandes en défilement, et aussi une hausse de productivité.

Préférentiellement, le dispositif selon l'invention prévoit que les deux chemins de guidage du premier et du deuxième chariots sont au moins parallèles, voire identiques si le positionnement de tête de découpe sinon de soudage sur chacun des chariots est prédéfinie avant d'activer les chariots en déplacement. Tout au plus, un moyen simple et léger de réglage fin de position de tête de soudage sur le premier chariot peut être additionnellement disposé sur le premier chariot.

Selon un mode de réalisation préféré par sa simplicité, le dispositif selon l'invention prévoit que le deuxième chariot comprend au moins deux têtes de découpe, idéalement présentant un écartement fixe afin de découper transversalement simultanément les têtes et queues des deux bandes à rabouter sous une distance constante entre deux plans de coupe transversale. La dite distance est fixée par une valeur du dit écartement (Ec), en particulier dépendante de l'encombrement (connu donc pré-définissable) des mors de serrage et du châssis du premier chariot et sa tête dédiée.

Idéalement, les chemins de guidage du premier et du deuxième chariots comprennent au moins un simple guide longiligne parallèle aux plans de coupe des bandes à découper et à souder. La longueur du dit guide est au moins la somme de la longueur de la course du chariot de découpe et de la longueur utile en position de parking des deux chariots de part et d'autre des queue et tête de bandes de format maximal. Ce guide peut être réalisée de plusieurs manières, à l'aide d'au moins une coulisse, au moins un rail, ou tout autre moyen de guidage linéaire des chariots disposé en vis-à-vis d'au moins une des faces communes des queue et tête de bandes à souder. Sa structure ainsi fort simplifiée lui permet de rester peu encombrant et moins massif que les dispositifs de guidage connus dans l'art antérieur, tel qu'un support en « C » ou autre support renforcé pour porter des translateurs/pivots imbriqués.

D'autres avantages et des modes de réalisation du dispositif selon l'invention ainsi qu'une méthode associée sont avantageusement possibles et sont fournis à l'aide de figures décrites :
- Figure 1: Dispositif de déplacement selon l'invention en position de prédécoupe,
- Figure 2: Dispositif de déplacement selon l'invention en position de fin d'étape de découpe et en position de pré-soudage,
- Figure 3: Dispositif de déplacement selon l'invention muni d'un réglage précis/fin de positionnement de tête de soudage,
- Figure 4: Dispositif de déplacement selon l'invention en position de fin d'étape de soudage,
- Figure 5: Dispositif de déplacement selon l'invention en position de prédécoupe vue de face par rapport à une direction de défilement de bandes.

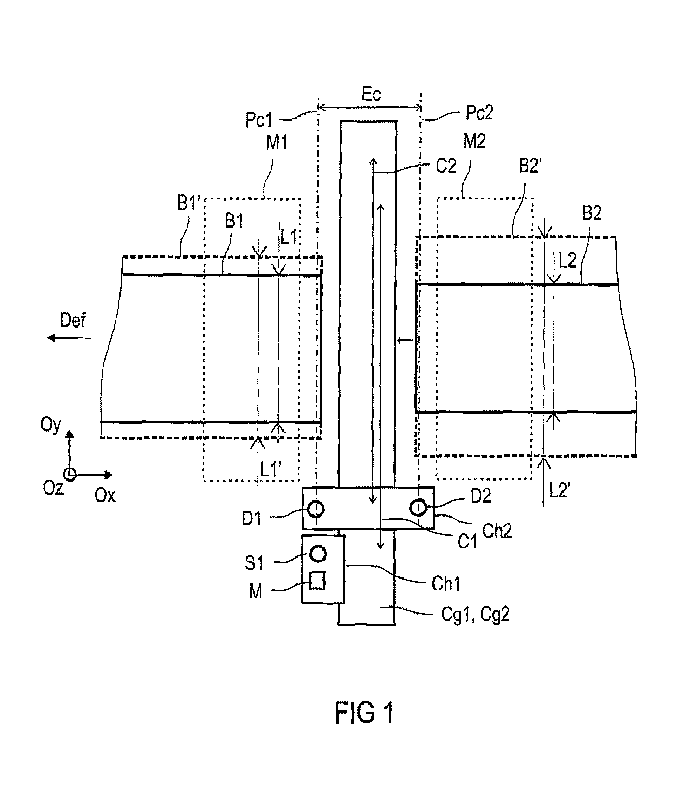

Figure 1 présente une vue de dessus d'un ensemble de bandes métalliques (B1, B2, B1', B2') de largeurs diverses et défilant selon une direction longitudinale (Def) (= direction inverse de l'axe Ox) au travers d'une soudeuse. Seuls deux mors (M1, M2) de soudeuse sont représentés pour des raisons de clarté afin de simplement matérialiser la dite soudeuse, les dits mors ayant pour fonction de bloquer, sous une position serrée, respectivement la queue de bande (B1, B1') et la tête de bande (B2, B2') et enfin de déplacer la tête de bande (B2, B2') vers la queue de bande (B1, B1'). La soudeuse comprend un dispositif de déplacement d'au moins un arrangement de découpe et de soudage selon l'invention. Figure 1 présente ledit dispositif en position de prédécoupe.

Principalement, le dit dispositif de déplacement d'au moins un arrangement de découpe et de soudage est apte à découper puis souder une queue d'une première bande (B1) métallique avec une tête d'une deuxième bande (B2) métallique. Le dispositif comprend un premier chariot (Ch1) maintenant au moins une tête de soudage (S1), le dit premier chariot (Ch1) étant déplaçable sur un chemin de guidage (Cg1) suivant une première course (C1) balayant une région transversale de bande. La première course (C1) a une longueur permettant un soudage effectif sur au moins la plus petite des largeurs de queue et tête de bandes découpées. Le dispositif comprend au moins un deuxième chariot (Ch2) distinctement mobile du premier chariot maintenant une tête de découpe (D1), le dit deuxième chariot (Ch2) étant déplaçable sur un chemin de guidage (Cg2) suivant une deuxième course (C2). La deuxième course (C2) a une longueur permettant un découpage effectif sur au moins la plus grande des largeurs de queue et tête de bandes à découper.

Enfin, le dispositif selon l'invention se caractérise en ce que :
- la tête de soudage (S1) est dédiée uniquement à un mode de soudage,
- le deuxième chariot (Ch2) est dédié exclusivement à un mode de découpe.

A la figure 1 sous une vue de dessus de la soudeuse, les deux chariots sont disposés d'un côté des queue et tête de bandes (B1, B2), c'est-à-dire en position de parking avant d'amorcer une étape de découpe au moyen du deuxième chariot (CH2). Les deux chemins de guidage (Cg1, Cg2) sont au moins parallèles, voire identiques, rendant entre autre ainsi le dispositif fort simple, car toutes les étapes de découpe et de soudage peuvent d'une part se dérouler directement successivement. D'autre part, le déplacement des chariots que le dit dispositif induit est uniquement et simplement linéaire le long des chemins de guidage (Cg1, Cg2), les chemins de guidage comprenant au moins un guide longiligne jouant aussi le rôle de moyen de portage.

Avantageusement, le dispositif selon l'invention prévoit que le deuxième chariot (CH2) comprend au moins deux têtes de découpe (D1, D2), idéalement présentant un écartement (Ec) fixe afin de découper transversalement simultanément les têtes et queues des deux bandes à rabouter sous une distance constante entre deux plans de coupe transversale (Pc1 Pc2). Cette distance est aisément fixée par une valeur du dit écartement (Ec), en particulier dépendante de l'encombrement des mors de serrage (écartés en position de découpe) et du châssis du dit chariot.

Le premier chariot (CH1) comprend au moins un des modules (M) suivants :
- un moyen de contrôle de qualité de soudure;
- une unité de galetage de zone soudée ;
- un moyen de recuit de zone à souder et/ou soudée.

En particulier, l'unité de galetage comprenant un galet d'écrasement de soudure est aussi très simplement intégrable au premier chariot, car le galet est disposé dans un plan uniquement transversal (Oy, Oz) comme la tête de soudage (S1) et ne vient pas encombrer l'espacement limité entre les mors, en particulier en position rapprochée des mors de serrage lors de l'étape de soudage. Il en est de même pour l'intégration sur le premier chariot de soudage d'un moyen de contrôle de qualité de soudure et/ou d'un moyen de recuit de zone à souder et/ou soudée (c'est-à-dire disposé en amont et/ou en aval de la tête de soudage).

**Figure 2** présente le dispositif de déplacement selon l'invention et figure 1, mais en position de fin d'étape de découpe et en position de pré-soudage, c'est-à-dire en fin de l'étape de découpe décrite à la figure 1, une fois que le deuxième chariot (Ch2) a été déplacé en mode de découpe des queue et tête de bandes (B1, B2) sur la deuxième course (C2). Le premier chariot (Ch1) de soudage est donc encore positionné dans la zone de parking initial d'un côté des bandes (B1, B2) et le deuxième chariot (Ch2) est enfin à sa position de zone de parking de l'autre côté des bandes (B1, B2). A ce stade, au moins un des mors (M2) de soudeuse serré sur la bande (B2) est rapproché vers l'autre mors (M1) sous la direction axiale (Ox, Mid), afin de venir disposer les queue et tête de bandes découpées (et donc les plans de coupe (Pc1 Pc2) correspondent parfaitement) en vis-à-vis autour d'une plan de soudage (Ps1), ici en figure 2, le même que le plan de découpe (Pc1).

Il est toutefois possible que, selon le format, l'épaisseur, les propriétés physiques des bandes à souder et le procédé de soudage, les bords découpés de queue et tête de bandes doivent présenter un jeu plus ou moins significatifs, imposant ainsi au plan de soudage d'être sensiblement décalé et ajusté axialement (= longitudinalement selon la direction (Ox) dans le sens de défilement (Def) des bandes) du plan initial de découpe (Pcl) achevée de la queue de bande (B1). A ce titre, un moyen dé réglage précis/fin est proposé à la **figure 3****,** en ce que au moins la tête de soudage (S1) du premier chariot (Ch1) est installée sur une unité mobile (UM) permettant un réglage axial (Ra) de positionnement de la dite tête (S1) par rapport à des axes de coupe et de soudage (Pc1 Ps1). Plus particulièrement et de manière fort simple, l'unité mobile (UM) est disposée sur un chemin de guidage solidaire du premier chariot (S1), comme un chemin à guidage linéaire (Cg_lin) ayant une angularité (α) par rapport aux axes de coupe et de soudage (Pc1 Ps1) telle que - 1°< α < 90°. Ainsi, par exemple si l'angle choisi est d'environ 10°, une translation linéaire de 10mm suivant le chemin de guidage linéaire (Ch_lin) permettra un décalage axial effectif plus fin d'environ 1mm selon la direction (Ox, Mid). De cette façon, la translation linéaire ne requiert pas de moyen de déplacement de haute précision (onéreux voire de plus massifs, lourds), car la précision requise pour le réglage axial dit « plus fin » est, si besoin, simplement augmentée en diminuant l'angularité (α). La translation linéaire suivant le chemin de guidage linéaire (Ch_lin) ou/et un changement d'angularité peut/peuvent être réalisé(s) manuellement ou automatiquement par des mécanismes peu encombrants et de précision faible en fonction des types et formats de bandes à souder.

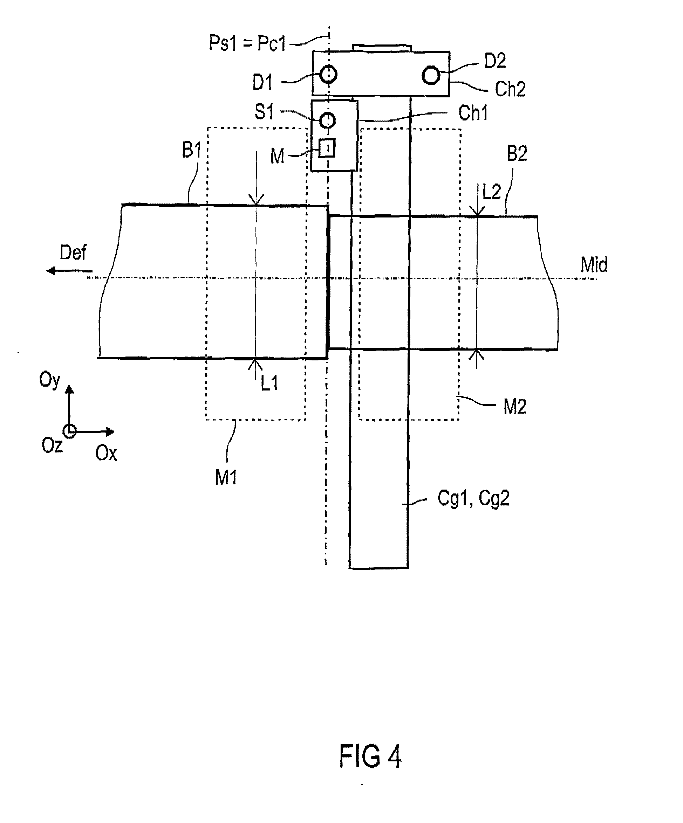

**Figure 4** présente le dispositif de déplacement selon l'invention en position de fin d'étape de soudage le long de la première course (C1) de soudage, le premier et le deuxième chariots (Ch1, Ch2) se trouvant en position de zone de parking, du côté opposé de bandes (B1, B2) initialement défini en figure 1. Les étapes de découpe et de soudage ont donc été effectuées sans étape intermédiaire de repositionnement de chariots ou têtes.

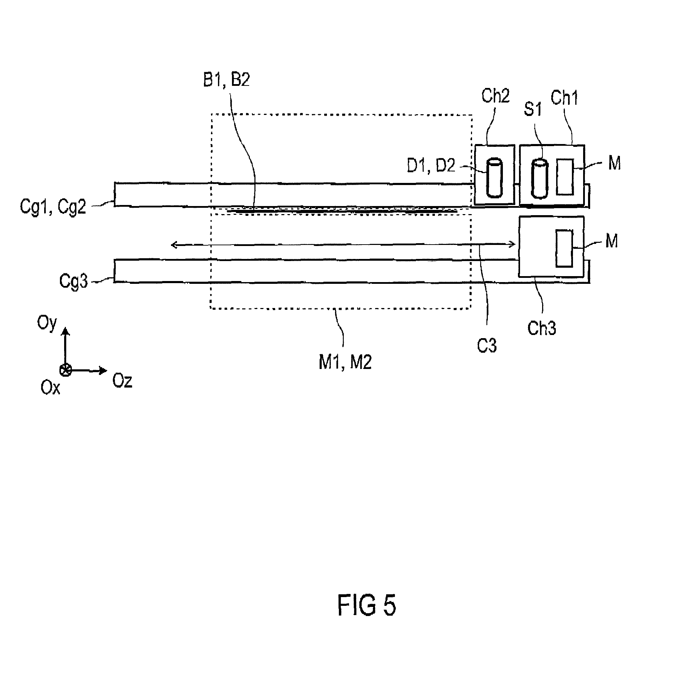

**Figure 5** présente le dispositif de déplacement selon l'invention en position de prédécoupe (voir figure 1) en vue de face (plan Oy, Oz) par rapport à la direction (Ox) de défilement de bandes. Le dispositif selon l'invention comprend un troisième chariot (Ch3), distinctement mobile du premier et du deuxième chariot (Ch1, Ch2) étant déplaçable sur un chemin de guidage (Cg3) suivant une course (C3), au moins parallèle aux chemins de guidage (Cg1, Cg2) et comprenant au moins un des modules (M) suivants :
- optionnellement au moins une tête de soudage ;
- un moyen de contrôle de qualité de soudure ;
- une unité de galetage de zone soudée ;
- un moyen de recuit de zone à souder et/ou soudée.

Le premier et le troisième chariot (Ch1, Ch3) sont disposés respectivement de chaque côté des faces de queue et tête de bandes, en particulier chacun des dits chariots est déplaçable indépendamment sur deux chemins de guidage (Cg1, Cg3) parallèles et distincts. Les courses du premier et du troisième chariots (Ch1, Ch3) sont parallèles et leur déplacement est au moins synchrone dans l'espace et le temps durant des étapes de soudage, galetage, contrôle qualité et recuit, en particulier de façon à réaliser un galetage des faces supérieure et inférieure d'un joint de soudure en cours sur une même zone lors du déplacement des deux chariots pour garantir un écrasement ponctuel bilatéral parfait. Pour supporter le troisième chariot (Ch3), un simple guide longiligne de type comparable à celui prévu pour le premier et le deuxième chariots (Ch1, Ch2) peut être disposé sous les mors de serrage, ici en partie base de soudeuse, si le guide longiligne du premier et du deuxième chariots (Ch1, Ch2) est disposé en partie haute de soudeuse par rapport aux faces de bandes (B1, B2).

Plus généralement et pour tous les cas de figures 1 à 5, le dispositif selon l'invention prévoit que les têtes de soudage et/ou de découpe comprennent une sortie laser apte au soudage de bandes métalliques, ladite sortie étant en particulier couplée à un guide d'onde soit à fibre optique soit aérien permettant un couplage du guide vers la sortie laser en déplacement synchrone avec au moins un des chariots associé à une des dites têtes. Autrement dit, les têtes de soudage et/ou de découpe sont couplées à leur entrée à au moins une source laser, via démultiplication de guides d'ondes soit à fibre optique soit aérien. Ce mode de réalisation permet de délocaliser les sources laser du dit dispositif selon l'invention afin de ne pas surcharger les chariots et donc d'éviter un surdimensionnement et un alourdissement des moyens de guidage longiligne et de portage des chariots.

Alternativement, les têtes de découpe peuvent utiliser un procédé mécanique, par plasma ou par jet fluide haute pression afin de mettre en oeuvre une étape de découpe des queue et tête des bandes (B1, B2). Ici, de la même façon que pour une découpe laser, les chariots se doivent de porter un nombre minimal d'éléments de découpe, en ce que tout module d'alimentation mécanique ou énergétique de la tête de découpe soit délocalisé hors du deuxième chariot de découpe. Ainsi, le deuxième chariot de découpe conserve une taille et un poids minimal, de façon à avantageusement diminuer le dimensionnement et la masse du dispositif selon l'invention.

Par ailleurs, le dispositif selon l'invention peut aussi prévoir que le premier chariot (CH1) maintenant au moins la première tête de soudage (S1) maintient également au moins une tête de soudage complémentaire à au moins une position intermédiaire selon la direction transversale (Oy) de soudage sur le premier chariot qui, lorsque le dit chariot est déplacé de façon à ce que la tête de soudage (S1) en extrémité de support se situe en vis-à-vis d'une des faces des bandes(B1, B2) comme par exemple au-dessus des bandes(B1, B2) à au moins une demi-largeur des bandes, la tête complémentaire est disposée en bord de largeur variable de bande, à savoir le bord de la bande à largeur minimale. De cette façon, la largeur de soudage est segmentée en au moins deux demi-largeurs, ce qui réduit de moitié la durée du cycle de soudage initialement au moyen d'une tête de soudage. Il est enfin possible d'ajouter deux, trois, etc. tête de soudage complémentaires pour augmenter une segmentation de joint de soudure le long de la largeur de bandes à souder. Une ou plusieurs unités-support de réglage de têtes de soudage complémentaires sont alors installées sur le premier chariot (Ch1) afin de supporter et déplacer les dites têtes de soudage complémentaires. La position intermédiaire de ou des têtes de soudage complémentaires sur le premier chariot de soudage peut aussi être réglable selon la direction transversale (Oy) et en fonction de la largeur variable (L1, L1' ; L2, L2') d'au moins la bande de largeur minimale, le réglage de position se réalisant en particulier de manière manuelle voire autonome, idéalement motorisée. Ainsi, au moins une tête de soudage complémentaire est installée sur le premier chariot de soudage(Ch1) par l'intermédiaire d'une unité-support de réglage, ladite unité de réglage permettant une course de positionnement transversal d'au moins la tête complémentaire de soudage.

Par ce biais, la durée d'une étape de soudage est avantageusement divisée par un facteur d'au moins deux, voire davantage si le nombre de têtes dites de type complémentaire est supérieur à deux. Enfin, chacune des courses nécessaires à l'opération de soudage (par têtes fixe et complémentaire) vis-à-vis des produits à souder sont également réduites par un facteur deux ou plus, ce qui permet sur une course réduite de permettre une haute précision de guidage sous des tolérances constructives mécaniques peu élevées ce qui minimise avantageusement les coûts de réalisation. Ceci permet enfin une conception de support de maintien des têtes plus simple, c'est-à-dire d'éviter tout surdimensionnement dudit support (voire même de profiter d'un sous-dimensionnement), ainsi que de s'affranchir de propriétés de conception du support lui garantissant une plus haute précision de portage, tout particulièrement sur des courses les plus larges.

Enfin, l'invention englobant les modes de réalisation associé au dispositif de déplacement présenté propose une méthode de découpe et de soudage apte à souder une queue d'une première bande métallique avec une tête de deuxième bande métallique, les deux bandes défilant (Def) en continu dans une ligne de traitement métallique, pour laquelle la première et la deuxième bande sont introduites dans une soudeuse comprenant le dispositif de déplacement selon l'invention et au moins deux paires de mors de serrage pour la queue et la tête, et où au moins le premier et le deuxième, voire le troisième chariots (Ch1, Ch2, Ch3) sont mis en position de parking, intermédiaire (= d'une part et d'autre des largeurs de bandes) ou en déplacement sur un même chemin physique de guidage(Cg1, Cg2) voire sur deux chemins de guidage (Cg1, Cg3) physiquement distincts et parallèles en fonction du cycle de séquençage des opérations de découpe, soudage, et éventuellement contrôle qualité, galetage et recuit de zone affectée à la soudure.

La dite méthode selon l'invention prévoit avantageusement que les chariots (Ch1, Ch2, Ch3) sont déplacés en fonction de la distance entre les paires de mors selon au moins deux valeurs d'écart éloigné en découpe et proche en soudage entre chaque paire de mors. Inversement, la position instantanée de chacun des chariots de découpe et de soudage (parking, côté de bandes) délivre une information à un module de contrôle du positionnement des mors afin d'enchainer sans interruption les étapes de découpe et de soudage.

A titre d'exemple pour des bandes métalliques débobinées d'environ 2m de large et d'une épaisseur inférieure à 10mm, la méthode de soudage selon l'invention permet d'activer une première phase de découpe simultanée de la queue de la première bande métallique et la tête de deuxième bande métallique pour une première valeur d'écart maximal - par exemple 450mm - entre chaque paire de mors est effectuée avant une phase de soudage des queue et tête pour une deuxième valeur d'écart minimale - par exemple 6mm - entre chaque paire de mors. Le déplacement des mors de 450mm à 6mm est engagé dès que le deuxième chariot de découpe sort de sa zone de découpe vers la position de parking après découpe (figure 2).

## Revendications

1. Dispositif de déplacement d'au moins un arrangement de découpe et de soudage apte à découper puis souder une queue d'une première bande (B1) métallique avec une tête d'une deuxième bande (B2) métallique, ledit dispositif comprenant :
- au moins un premier chariot (Ch1) maintenant au moins une tête de soudage (S1), le dit premier chariot (Ch1) étant déplaçable sur un chemin de guidage (Cg1) suivant une première course (C1) balayant une région transversale de bande,
- au moins un deuxième chariot (Ch2) distinctement mobile du premier chariot maintenant une tête de découpe (D1), le dit deuxième chariot (Ch2) étant déplaçable sur un chemin de guidage (Cg2) suivant une deuxième course (C2),
**caractérisé en ce que** :
- la tête de soudage (S1) est dédiée uniquement à un mode de soudage,
- le deuxième chariot (Ch2) est dédié exclusivement à un mode de découpe.

2. Dispositif selon revendication 1, pour lequel les deux chemins de guidage (Cg1, Cg2) sont au moins parallèles, voire identiques.

3. Dispositif selon revendication 1 ou 2, pour lequel le deuxième chariot (Ch2) comprend au moins deux têtes de découpe (D1, D2), idéalement présentant un écartement fixe afin de découper transversalement simultanément les têtes et queues des deux bandes à rabouter sous une distance constante entre deux plans de coupe transversale (Pc1 Pc2).

4. Dispositif selon revendication 1 ou 2, pour lequel les chemins de guidage (Cg1, Cg2) comprennent au moins un guide longiligne.

5. Dispositif selon revendications 1 à 4, pour lequel au moins la tête de soudage (S1) est installée sur une unité mobile (UM) permettant un réglage axial (Ra) de positionnement de la dite tête (S1) par rapport à des axes de coupe et de soudage (Pc1 Ps1)

6. Dispositif selon revendication 5, pour lequel l'unité mobile (UM) est disposée sur un chemin de guidage solidaire du premier chariot (S1), comme un chemin à guidage linéaire ayant une angularité (α) par rapport aux axes de coupe et de soudage (Pc1 Ps1) telle que ∼ 1°< α < 90°

7. Dispositif selon revendication 1 à 6, pour lequel le premier chariot (Ch1) comprend au moins un des modules (M) suivants :
- un moyen de contrôle de qualité de soudure;
- une unité de galetage de zone soudée ;
- un moyen de recuit de zone à souder et/ou soudée.

8. Dispositif selon revendication 1 à 7, comprenant un troisième chariot (CH3), distinctement mobile du premier et du deuxième chariot (Ch1, Ch2) étant déplaçable sur un chemin de guidage (CG3) suivant une course (C3), au moins parallèle aux chemins de guidage (Cg1, Cg2) et comprenant au moins un des modules (M) suivants :
- un moyen de contrôle de qualité de soudure ;
- une unité de galetage de zone soudée ;
- un moyen de recuit de zone à souder et/ou soudée.

9. Dispositif selon une des revendications précédentes, le premier chariot (CH1) maintenant au moins une tête de soudage (S1) maintient au moins une tête de soudage complémentaire à au moins une position intermédiaire sur le chariot qui, lorsque le chariot est déplacé de façon à ce que la tête de soudage (S1) en extrémité de support se situe en vis-à-vis d'une des faces de bandes(B1, B2) à au moins une demi-largeur des bandes, la tête complémentaire est disposée en bord de largeur variable de bande, à savoir le bord de la bande à largeur minimale.

10. Dispositif selon revendication 9, pour lequel le premier et le troisième chariot (CH1, CH3) sont disposés respectivement de chaque côté des faces de queue et tête de bandes, en particulier chacun des dits chariots est déplaçable indépendamment sur deux chemins de guidage (Cg1, Cg3) parallèles et distincts.

11. Dispositif selon une des revendications précédentes, pour lequel les têtes de soudage et/ou de découpe comprennent une sortie laser apte au soudage de bandes métalliques, ladite sortie étant en particulier couplée à un guide d'onde soit à fibre optique soit aérien permettant un couplage du guide vers la sortie laser en déplacement synchrone avec au moins un des chariots associé à une des dites têtes.

12. Dispositif selon une des revendications précédentes, pour lequel les têtes de soudage et/ou de découpe sont couplées à leur entrée à au moins une source laser, via démultiplication de guides d'ondes soit à fibre optique soit aérien.

13. Dispositif selon une des revendications précédentes, pour lequel les têtes de découpe utilisent un procédé mécanique, par plasma ou par jet fluide haute pression.

14. Méthode de découpe et de soudage apte à souder une queue d'une première bande métallique avec une tête de deuxième bande métallique, les deux bandes défilant (Def) en continu dans une ligne de traitement métallique, pour laquelle la première et la deuxième bande sont introduites dans une soudeuse comprenant le dispositif de déplacement selon une des revendications précédentes et au moins deux paires de mors de serrage pour la queue et la tête, et où au moins le premier et le deuxième, voire le troisième chariots (Ch1, Ch2, Ch3) sont mis en position de parking, intermédiaire ou en déplacement sur un même chemin de guidage(CG1, CG2) voire sur deux chemins de guidage (Cg1, Cg3) distincts et parallèles en fonction du cycle de séquençage des opérations de découpe, soudage, et éventuellement contrôle qualité, galetage et recuit de zone affectée à la soudure.

15. Méthode selon revendication 14, pour laquelle les chariots (Ch1, Ch2, Ch3) sont déplacés en fonction de la distance entre les paires de mors selon au moins deux valeurs d'écart éloigné en découpe et proche en soudage entre chaque paire de mors.
